# EUROPEAN PATENT APPLICATION

(11) **EP 4 484 351 A1**
(43) Date of publication of application: **01.01.2025**
(21) Application number: 24764126.9
(22) Date of filing: 21.02.2024
(51) Int. Cl.: B66B 5/00, G06Q 50/10, G06F 3/048

(54) **MAINTENANCE MANAGEMENT SYSTEM OF PASSENGER TRANSFER DEVICE**

(30) Priority: 27.02.2023 KR 20230026039; 27.02.2023 KR 20230026041; 27.02.2023 KR 20230026042; 02.11.2023 KR 20230150046; 02.11.2023 KR 20230150048; 02.11.2023 KR 20230150049
(71) Applicant: Hyundai Elevator Co., Ltd., Chungju-si, Chungcheongbuk-do (KR)
(72) Inventor: SEO, Bu Geon, Chungju-si, Chungcheongbuk-do 27329 (KR); SEO, Ji Hye, Chungju-si, Chungcheongbuk-do 27329 (KR); YOUN, Suk Jun, Chungju-si, Chungcheongbuk-do 27329 (KR); HAN, Yong Gu, Chungju-si, Chungcheongbuk-do 27329 (KR)
(74) Representative: Baldus, Oliver
(86) International application number: PCT/KR2024/002269
(87) International publication number: WO 2024/181726

(57) **Abstract**

The present invention relates to a maintenance management system of a passenger transfer device and provides the maintenance management system of a passenger transfer device, the system including: a failure diagnosis server for collecting and storing error code information of the passenger transfer device from a passenger transfer device control panel and diagnosing a failure cause on the basis of the collected error code information; and a repairment terminal for accessing the failure diagnosis server to receive the error code information stored in the failure diagnosis server and a diagnosis result with respect to at least one failure cause and displaying same.

## Description

### [Technical Field]

The present invention relates to a maintenance management system of a passenger transfer device.

### [Background Art]

In various high-rise buildings for residential and business purposes, elevators are installed to facilitate vertical movement of passengers visiting such buildings.

An elevator includes an elevator car that moves passengers while moving up and down along a hoistway formed in a building in a vertical direction, a mechanical part provided with a motor and a winding machine to generate a predetermined power to move the elevator car to a corresponding floor in response to a button operation of a passenger, and an elevator controller that controls the mechanical part in response to the button operation of the passenger such that the elevator car can be smoothly and stably operated.

Such an elevator inevitably undergoes failure during use and, when failure occurs in the elevator, rapid repair of the elevator is a very important issue in terms of elevator maintenance management.

In general, when an elevator issues a failure report, a maintenance worker is dispatched to check and analyze an error code to determine a cause of the failure by connecting a serial cable to a control panel in a machine room and carries out maintenance work.

In this case, since the error code can be checked and analyzed only after the maintenance worker arrives at a corresponding site, it is difficult to determine the failure cause in advance.

In addition, it is difficult to prepare necessary components or equipment according to the failure cause in the course of dispatching to a corresponding site. Thus, it is necessary to prepare additional components or equipment for maintenance work after on-site inspection, causing problems with a cumbersome maintenance work procedure and increase in time for the maintenance work.

Moreover, in the event of elevator failure, a significantly large number of error codes is generated in a short period of time, thereby making it difficult for a maintenance worker to determine an exact failure cause based on the error codes. In particular, for inexperienced maintenance workers, it is very difficult to find a main failure cause based on multiple error codes.

### (Prior art Reference)

Korean Patent Registration No. 10-1775529

### [Disclosure]

### [Technical Problem]

It is one aspect of the present invention to provide a maintenance management system of a passenger transfer device that improves efficiency in maintenance and management of the passenger transfer device.

It is another aspect of the present invention to provide a maintenance management system of a passenger transfer device that allows a maintenance worker to check error code data in advance before the maintenance worker is dispatched to a corresponding site in the event of failure of the passenger transfer device.

It is a further aspect of the present invention to provide a maintenance management system of a passenger transfer device that allows a maintenance worker outside a site of a failure to obtain data regarding a failure cause.

It is yet another aspect of the present invention to provide a maintenance management system of a passenger transfer device that improves efficiency of maintenance work.

It is yet another aspect of the present invention to provide a maintenance management system of a passenger transfer device that can diagnose a failure cause based on error code data selected by a maintenance worker at a maintenance terminal.

### [Technical Solution]

In accordance with one aspect of the present invention, there is provided a maintenance management system of a passenger transfer device, including: a failure diagnosis server configured to collect and store error code data of the passenger transfer device from a control panel of the passenger transfer device, and configured to diagnose a failure cause based on the collected error code data; and a maintenance terminal configured to access the failure diagnosis server to receive and display the error code data and a diagnosis result for at least one failure cause sent from the failure diagnosis server.

The failure diagnosis server may include: a first communication unit configured to receive the error code data recorded in the control panel of the passenger transfer device; a diagnosis unit configured to analyze the error code data to diagnose a failure cause; and a second communication unit configured to receive a data request signal from the maintenance terminal and to send the error code data and a failure diagnosis result diagnosed by the diagnosis unit to the maintenance terminal, and may be configured to send at least one of the error code data and the failure diagnosis result to the maintenance terminal upon receiving the data request signal from the maintenance terminal.

The error code data recorded in the control panel of the passenger transfer device may be sent to a central management server and the failure diagnosis server may be configured to receive the error code data from the central management server through communication of the first communication unit with the central management server.

The maintenance terminal may include: an input unit for input operation of a maintenance worker; a display unit configured to display at least one of the error code data and the failure diagnosis result sent from the failure diagnosis server; a terminal communication unit configured to receive at least one of the error code data and the failure diagnosis result from the failure diagnosis server through communication with the second communication unit; and a controller configured to send a data request signal to the failure diagnosis server through the terminal communication unit upon generation of an input signal by the maintenance worker and configured to control the display unit to display at least one of the error code data and the failure diagnosis result received from the failure diagnosis server corresponding to transmission of the data request signal.

When an access input signal of the maintenance worker to a link address sent to the failure diagnosis terminal via a text message is generated, the controller may send a data request signal corresponding to the link address to the failure diagnosis server and may control the display unit to display at least one of the error code data and the failure diagnosis result received from the failure diagnosis server corresponding to transmission of the data request signal.

When an access input signal of the maintenance worker is generated through a connection button of a preset maintenance management program, the controller may send a data request signal corresponding to the connection button to the failure diagnosis server and may control the display unit to display at least one of the error code data and the failure diagnosis result received from the failure diagnosis server corresponding to transmission of the data request signal.

When the access input signal to the link address and the access input signal through the maintenance management program are generated, the controller may send a data request signal for the error code data to the failure diagnosis server and may control the display unit to display the error code data received from the failure diagnosis server.

When a data request input signal requesting the failure diagnosis result is generated by input operation of the maintenance worker, the controller may send a data request signal for the failure diagnosis result to the failure diagnosis server and may control the display unit to display the failure diagnosis result received from the failure diagnosis server together with the error code data.

The failure diagnosis server may further include a failure cause storage unit configured to match and store a plurality of predetermined reference error code data and at least one failure cause corresponding to each of the reference error code data, and the diagnosis unit may be configured to diagnose a failure cause for the error code data based on data stored in the failure cause storage unit.

The failure diagnosis server may further include a failure cause update unit configured to newly match a failure cause to the reference error code data stored in the failure cause storage unit by reflecting information about a failure treatment result input by the maintenance worker.

The error code data displayed on the maintenance terminal may include at least one of an error code name, an error code occurrence time, and information about an operation state of the passenger transfer device upon occurrence of an error code.

In accordance with another aspect of the present invention, there is provided a maintenance management system of a passenger transfer device, including: a failure diagnosis server configured to collect and store error code data of the passenger transfer device from a control panel of the passenger transfer device, and configured to diagnose a failure cause based on the collected error code data; and a maintenance terminal configured to access the failure diagnosis server to receive and display the error code data and a diagnosis result for the failure cause sent from the failure diagnosis server, wherein the failure diagnosis server is configured to classify a plurality of sequentially generated error code data into one time-series data group at every preset reference time interval and configured to diagnose a failure cause by analyzing the error code data for each time-series data group.

The failure diagnosis server may include: a first communication unit configured to receive the error code data recorded in the control panel of the passenger transfer device in real time; an error code storage unit configured to arrange and store the error code data received through the first communication unit in a time sequence and configured to classify the error code data into one time-series data group at every preset reference time interval; a diagnosis unit configured to analyze the error code data for each time-series data group stored in the error code storage unit to diagnose a failure cause for the time-series data group; and a second communication unit configured to receive a data request signal from the maintenance terminal and to send the error code data stored in the error code storage unit and a failure diagnosis result diagnosed by the diagnosis unit to the maintenance terminal, and may be configured to send the error code data and the failure diagnosis result to the maintenance terminal upon receiving the data request signal from the maintenance terminal.

The maintenance terminal may include: an input unit for input operation of a maintenance worker; a display unit configured to display at least one of the error code data and the failure diagnosis result sent from the failure diagnosis server; a terminal communication unit configured to receive at least one of the error code data and the failure diagnosis result from the failure diagnosis server through communication with the second communication unit; and a controller configured to send a data request signal to the failure diagnosis server through the terminal communication unit upon generation of an input signal by the maintenance worker and configured to control the display unit to display at least one of the error code data and the failure diagnosis result received from the failure diagnosis server corresponding to transmission of the data request signal.

The display unit may include a first output screen having an error code display region in which the error code data is displayed in a classified state for each time-series data group, and a diagnosis result display region in which a failure diagnosis result for the error code data is displayed for each time-series data group.

When an access input signal to the failure diagnosis server is generated by a maintenance worker, the controller may send a data request signal for the error code data to the failure diagnosis server and may control the display unit to display the error code data received corresponding to the data request signal from the failure diagnosis server in the error code display region in a classified state for each time-series data group.

The controller may control the display unit to display a diagnosis result request input button for inputting a data request signal for the failure diagnosis result in the diagnosis result display region, with the error code data displayed in a classified state for each time-series data group in the error code display region.

When an input signal requesting the failure diagnosis result is generated through the diagnosis result request input button, the controller may send a data request signal to the failure diagnosis server, the data request signal requesting a failure diagnosis result for error code data of a time-series data group corresponding to the diagnosis result request input button, and may control the display unit to display the failure diagnosis result while removing the diagnosis result request input button from the diagnosis result display region, upon receiving the failure diagnosis result from the failure diagnosis server corresponding to the data request signal.

When the failure diagnosis server receives a data request input signal for the failure diagnosis result from the maintenance terminal, the diagnosis unit may diagnose a failure cause for the error code data of the corresponding time-series data group and may be configured to send the diagnosis result to the maintenance terminal.

The diagnosis unit may be configured to diagnose the failure cause for the error code data of the corresponding time-series data group to derive a diagnosis result including at least one failure cause and occurrence probability information for each failure cause.

In accordance with a further aspect of the present invention, there is provided a method of controlling a maintenance management system of a passenger transfer device including a failure diagnosis server and a maintenance terminal, the method including: collecting and storing, by the failure diagnosis server, error code data of the passenger transfer device from a control panel of the passenger transfer device; diagnosing, by the failure diagnosis server, a failure cause based on the collected error code data; and accessing, by the maintenance terminal, the failure diagnosis server to receive and display the error code data and a diagnosis result for the failure cause sent from the failure diagnosis server, wherein the failure diagnosis server classifies a plurality of sequentially occurred error code data into one time-series data group at every preset reference time interval and diagnoses the failure cause by analyzing the error code data for each time-series data group.

In accordance with yet another aspect of the present invention, there is provided a maintenance management system of a passenger transfer device, including: a failure diagnosis server configured to collect and store error code data of the passenger transfer device from a control panel of the passenger transfer device, and configured to diagnose a failure cause based on the collected error code data; and a maintenance terminal configured to access the failure diagnosis server to receive and display the error code data and a diagnosis result for the failure cause sent from the failure diagnosis server, wherein the maintenance terminal allows a maintenance worker to select some error code data from among a plurality of error code data displayed on the maintenance terminal and requests a failure diagnosis result for the selected error code data to the failure diagnosis server, and the failure diagnosis server analyzes the error code data selected by the maintenance terminal to diagnose the failure cause in response to the data request signal from the maintenance terminal and sends a failure diagnosis result to the maintenance terminal.

The failure diagnosis server may include: a first communication unit configured to receive the error code data recorded in the control panel of the passenger transfer device in real time; an error code storage unit configured to arrange and store the error code data received through the first communication unit in a time sequence; a diagnosis unit configured to analyze the error code data selected through the maintenance terminal from among the error code data stored in the error code storage unit to diagnose the failure cause; and a second communication unit configured to receive a data request signal from the maintenance terminal and configured to send the error code data stored in the error code storage unit and the failure diagnosis result diagnosed by the diagnosis unit to the maintenance terminal, and may be configured to send the error code data and the failure diagnosis result to the maintenance terminal upon receiving the data request signal from the maintenance terminal.

The maintenance terminal includes: an input unit for input operation by a maintenance worker; a display unit configured to display the error code data and the failure diagnosis result sent from the failure diagnosis server; a terminal communication unit configured to receive the error code data and the failure diagnosis result from the failure diagnosis server through communication with the second communication unit; and a controller configured to send a data request signal to the failure diagnosis server through the terminal communication unit upon generation of an input signal by the maintenance worker and configured to control the display unit to display at least one of the error code data and the failure diagnosis result received from the failure diagnosis server corresponding to transmission of the data request signal.

The display unit may include: a first output screen having an error code display region in which the error code data is displayed in a classified state for each time-series data group, wherein the first output screen includes a selection mode conversion button to allow the maintenance worker to convert the first output screen to a selection screen mode, in which the maintenance worker can select the error code data displayed in the error code display region, and a selective diagnosis result request input button to allow the maintenance worker to request a failure diagnosis result for the error code data selected in the selection screen mode from the failure diagnosis server.

The display unit may include a selective diagnosis output screen capable of displaying an error code data selected by the maintenance worker and a failure diagnosis result for the selected error code data, and the controller may be configured to send a data request signal to the failure diagnosis server, the data request signal requesting the failure diagnosis result for the selected error code data, in response to an input signal generated by the diagnosis result request input button, and may be configured to control the display unit to display the error code data and the failure diagnosis result on the selective diagnosis output screen upon receiving the failure diagnosis result from the failure diagnosis server corresponding to transmission of the data request signal.

The selective diagnosis output screen may be displayed to overlap the first output screen.

In accordance with yet another aspect of the present invention, there is provided a method of controlling a maintenance management system of a passenger transfer device including a failure diagnosis server and a maintenance terminal, the method including: collecting and storing, by the failure diagnosis server, error code data of the passenger transfer device from a control panel of the passenger transfer device, followed by diagnosing a failure cause based on the collected error code data; and accessing, by the maintenance terminal, the failure diagnosis server to receive and display the error code data and a diagnosis result for the failure cause sent from the failure diagnosis server, wherein the maintenance terminal allows a maintenance worker to select some error code data from among a plurality of error code data displayed on the maintenance terminal and requests a failure diagnosis result for the selected error code data to the failure diagnosis server, and the failure diagnosis server analyzes the error code data selected by the maintenance terminal to diagnose the failure cause in response to the data request signal from the maintenance terminal and sends a failure diagnosis result to the maintenance terminal.

### [Advantageous Effects]

The present invention has an effect of improving efficiency of maintenance of a passenger transfer device by allowing a maintenance worker to check error code data in advance before dispatching to a failure site and to prepare necessary components and equipment in the event of failure of the passenger transfer device.

According to the present invention, since data regarding a failure cause is provided to a maintenance terminal, a maintenance worker can check the data regarding the failure cause not only at a failure site but also outside the failure site.

In addition, since a maintenance worker can prepare components or equipment corresponding to failure cause data before dispatching to a failure site, it is possible to improve repair procedures and times.

In addition, the present invention can make it easy for an unskilled maintenance worker to determine failure conditions and respond to failures.

According to the present invention, since it is possible to diagnose a failure cause based on error code data selected by a maintenance worker at a maintenance terminal, various types of failure diagnosis results can be obtained from a plurality of error codes.

In addition, since a failure cause for error code data generated during a specific time interval can be separately diagnosed, it is possible to refine a failure diagnosis procedure while improving failure diagnosis accuracy.

In addition, since a maintenance worker can prepare components or equipment corresponding to failure cause data before dispatching to a failure site, it is possible to improve repair procedures and times while improving efficiency of maintenance work.

### [Description of Drawings]

FIG. 1 is a conceptual block diagram of an overall configuration of an elevator maintenance management system according to one embodiment of the present invention.
FIG. 2 is a conceptual block diagram of an overall configuration of an elevator maintenance management system according to another embodiment of the present invention.
FIG. 3 is a block diagram of a failure diagnosis server and a maintenance terminal of the elevator maintenance management system according to the embodiment of the present invention.
FIG. 4 and FIG. 5 are exemplary views illustrating a method of accessing a failure diagnosis server by the maintenance terminal and a method of displaying a failure diagnosis result in the elevator maintenance management system according to the embodiment of the present invention.
FIG. 6 is an exemplary view illustrating error code data displayed on the maintenance terminal according to the embodiment of the present invention.
FIG. 7 is an exemplary view illustrating a method of displaying failure diagnosis results in the maintenance terminal according to the embodiment of the present invention.
FIG. 8 is an exemplary view of a screen displaying failure diagnosis results for user-selected error code data in the elevator maintenance management system according to the embodiment of the present invention.

### [Best Mode]

Hereinafter, exemplary embodiments of the present invention will be described in detail with reference to the accompanying drawings. Like components will be denoted by like reference numerals throughout the drawings. In addition, detailed descriptions of known functions and constructions which may unnecessarily obscure the subject matter of the invention will be omitted.

First, a passenger transfer device according to the present invention includes an elevator, an escalator, and a moving walkway. The following description will refer to elevators.

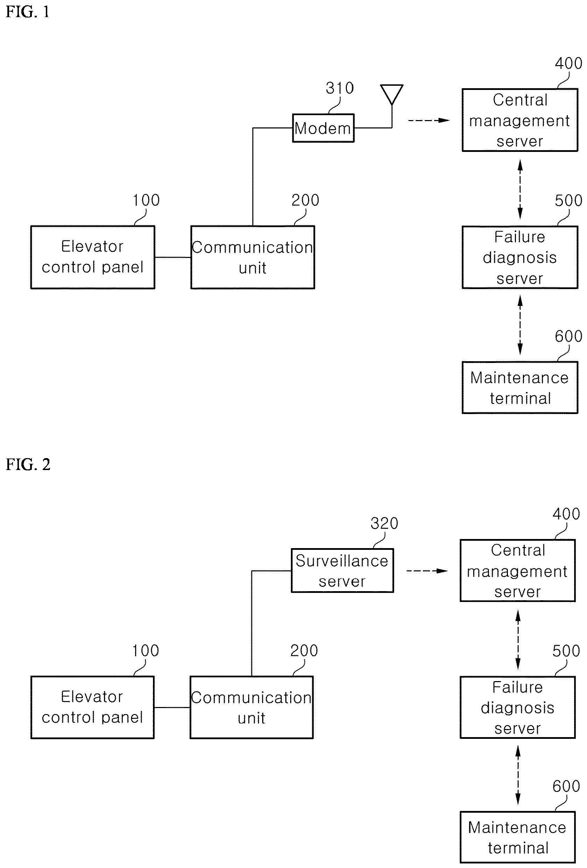

FIG. 1 is a conceptual block diagram of an overall configuration of an elevator maintenance management system according to one embodiment of the present invention and FIG. 2 is a conceptual block diagram of an overall configuration of an elevator maintenance management system according to another embodiment of the present invention.

An elevator maintenance management system according to one embodiment of the present invention includes a failure diagnosis server 500 configured to collect error code data from an elevator control panel 100 to diagnose a failure cause, and a maintenance terminal 600 configured to access the failure diagnosis server 500 to receive and display the error code data and a failure diagnosis result.

First, for the overall system configuration, the elevator may include a control panel 100 configured to control an operation state of the elevator. The control panel 100 may receive signals about operation state data of the elevator. The control panel may receive various failure occurrence signals. The operation state data and failure occurrence signals of the elevator may be generated by a plurality of sensors in the elevator. The control panel 100 may be configured to receive the operation state data and the failure occurrence signals of the elevator through the sensors. The control panel 100 may be configured to receive and store the operation state data and the failure occurrence signals of the elevator. In response to a failure occurrence signal, the control panel 100 may generate an error code that matches the failure occurrence signal.

The operation state signals and the error code data may be sent in real time to a central management server 400 through a communication unit 200. As shown in FIG. 1, the communication unit 200 may be configured to communicate with the central management server 400 through a modem 310 thereof to send the operation state signals and the error code data. When a separate surveillance system is present, as shown in FIG. 2, the communication unit 200 may communicate with the central management server 400 through a surveillance server 320 and send corresponding data.

The central management server 400 may be configured to send the received data to a separate failure diagnosis server 500. The failure diagnosis server 500 may be configured to receive the operation state signals and the error code data. The failure diagnosis server 500 may be implemented as a cloud server and may be connected to the maintenance terminal 600 via an internet protocol network. The operation state data of the elevator and the error code data received by the failure diagnosis server 500 may be sent to the maintenance terminal 600. In the maintenance terminal 600, a user may access the failure diagnosis server 500 through an application program to receive the operation state data of the elevator and the error code data. In addition, the failure diagnosis server 500 may be configured to analyze the received error code data to analyze a failure cause. The failure diagnosis server 500 may be configured to derive a diagnosis result of the failure cause. The derived diagnosis result may be provided to the maintenance terminal 600 through the application program of the maintenance terminal 600.

When a failure signal is generated from the elevator or a failure report is received, a maintenance worker may be selected according to the maintenance management system. Basic data about the elevator may be provided to the selected maintenance worker. The basic data about the elevator provided to the maintenance worker may include circumstances of the failure report or basic specifications of the elevator.

In the elevator maintenance management system according to the embodiment, error codes and a failure diagnosis result may be sent to the maintenance terminal through the failure diagnosis server 500. The maintenance worker can prepare necessary components or equipment before dispatching. As a result, a failure treatment time can be reduced and failure treatment work can be more easily performed.

In the following, details of the elevator maintenance management system according to the embodiment of the present invention will be described in more detail.

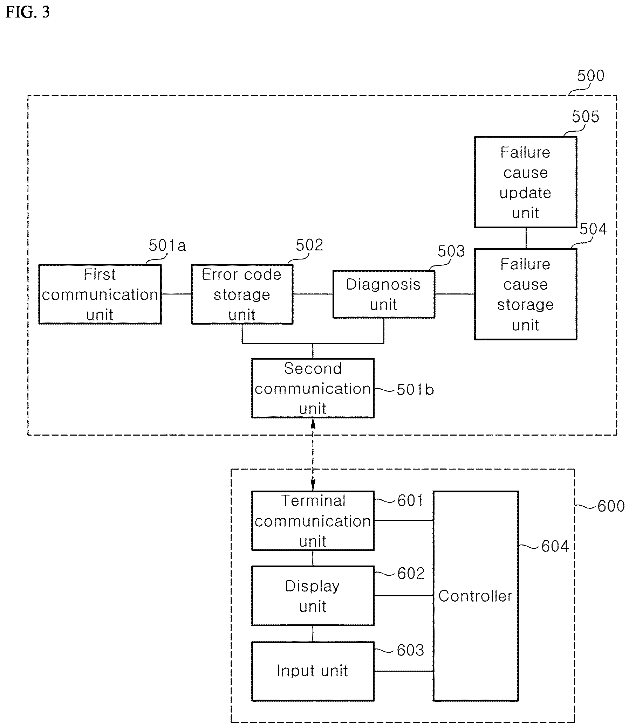

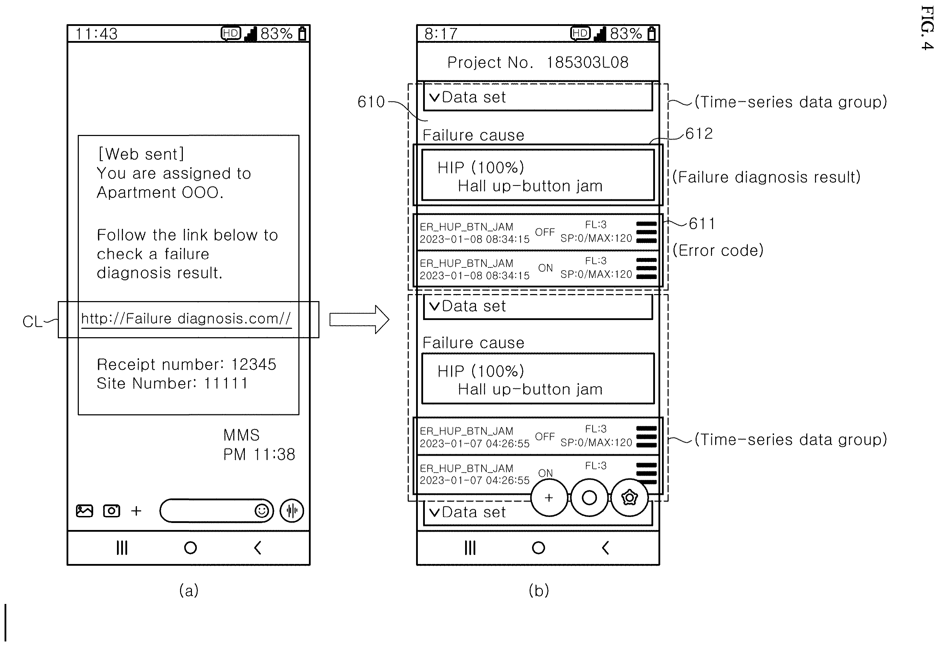

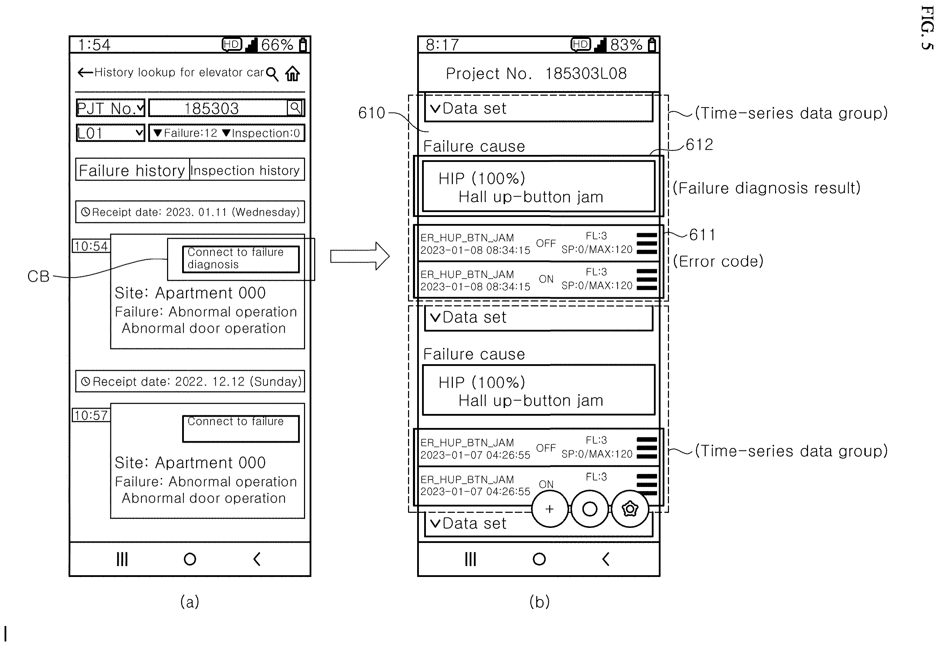

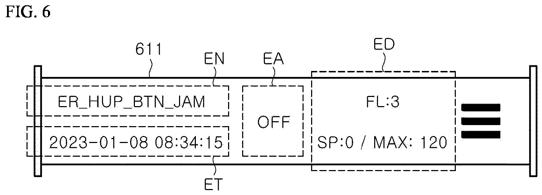

FIG. 3 is a block diagram of the failure diagnosis server and the maintenance terminal of the elevator maintenance management system according to the embodiment of the present invention, FIG. 4 and FIG. 5 are exemplary views illustrating a method of accessing the failure diagnosis server by the maintenance terminal and a method of displaying a failure diagnosis result in the elevator maintenance management system according to the embodiment of the present invention, and FIG. 6 is an exemplary view illustrating the form of error code data displayed on the maintenance terminal according to the embodiment of the present invention.

The elevator maintenance management system according to the embodiment of the present invention may include the failure diagnosis server 500 and the maintenance terminal 600, as described above.

The failure diagnosis server 500 may be configured to collect and store error code data of the elevator from the elevator control panel 100 and may be configured to diagnose a failure cause based on the collected error code data. The maintenance terminal 600 may be configured to access the failure diagnosis server 500 to receive and display the error code data and a diagnosis result for the failure sent from the failure diagnosis server 500.

The failure diagnosis server 500 may include a first communication unit 501a, an error code storage unit 502, a diagnosis unit 503, and a second communication unit 501b.

The first communication unit 501a is configured to receive the error code data recorded in the elevator control panel 100 in real time. As described above, the error code data recorded in the elevator control panel 100 is sent to the central management server 400 and the first communication unit 501a may be configured to receive the error code data from the central management server 400 through communication with the central management server 400. In addition, the first communication unit 501a may be configured to receive the operation state data of the elevator in addition to the error code data recorded in the elevator control panel 100. For example, the first communication unit 501a may be configured to receive general operation state data of the elevator, such as a speed of the elevator, a floor number, a door operation state, and detection signals of various sensors. In particular, the first communication unit 501a may be configured to receive various data, such as data about change in operation state of the elevator upon generation of an error code.

The error code storage unit 502 may be configured to store the error code data, the operation state data of the elevator and the like received through the first communication unit 501a. The diagnosis unit 503 may be configured to analyze the error code data stored in the error code storage unit 502 to diagnose a failure cause. The diagnosis unit 503 may be configured to diagnose the failure cause in response to a data request signal received from the maintenance terminal 600.

The second communication unit 501b may be configured to receive the data request signal from the maintenance terminal 600 through communication with the maintenance terminal 600. The second communication unit 501b may be configured to send the error code data stored in the error code storage unit 502 and a failure diagnosis result derived by the diagnosis unit 503 to the maintenance terminal 600. The second communication unit 501b may also be configured to send various other data, such as the operation state data of the elevator stored in the error code storage unit 502, to the maintenance terminal 600.

The failure diagnosis server 500 may be configured to collect the error codes recorded in the elevator control panel 100 and the operation state data of the elevator through the first communication unit 501a and to store the error codes and the operation state data of the elevator in the error code storage unit 502. When the failure diagnosis server 500 receives a data request signal from the maintenance terminal 600, the failure diagnosis server 500 may diagnose a failure cause for the corresponding error code through the diagnosis unit 503. Further, the failure diagnosis server 500 may be configured to send the error code data, the failure diagnosis result, and the operation state data of the elevator to the maintenance terminal 600.

The maintenance terminal 600 may refer to a wirelessly communicable terminal carried by maintenance workers. The maintenance terminal 600 may include an input unit 603, a display unit 602, a terminal communication unit 601, and a controller 604.

The input unit 603 may be formed on the maintenance terminal 600 for input operation by maintenance workers. The input unit 603 may be formed on the maintenance terminal 600 by touch operation through a touch panel or may be formed in various forms, such as separate physical buttons and the like.

The display unit 602 may be configured to display the error code data sent from the failure diagnosis server 500, a failure diagnosis result, and the operation state data of the elevator, and the like. The display unit 602 may be formed as a display screen formed on the maintenance terminal 600.

The terminal communication unit 601 may be configured to send data request signals and the like to the failure diagnosis server 500 or to receive the error code data, the failure diagnosis result, the operation state data of the elevator, and the like from the failure diagnosis server 500 through communication with the second communication unit 501b of the failure diagnosis server 500.

The controller 604 may be configured to control the input unit 603, the display unit 602, and the terminal communication unit 601 of the maintenance terminal 600. When a maintenance worker generates an input signal through the input unit 603, the controller 604 may send a data request signal corresponding to the input signal to the failure diagnosis server 500 through the terminal communication unit 601. In response to the data request signal, the failure diagnosis server 500 may send the error code data, the failure diagnosis result, and the operation state data of the elevator to the controller 604 through the terminal communication unit 601. The controller 604 may control the display unit to display the error code data, the failure diagnosis result, and the operation state data of the elevator received from the failure diagnosis server 500 on the display unit 602.

In response to a failure signal from the elevator, a maintenance worker may be selected and basic data about the elevator may be provided to the selected maintenance worker through the maintenance terminal 600. In one embodiment, error code data and a failure diagnosis result may be further sent to the maintenance terminal 600 through the failure diagnosis server 500.

Here, in one embodiment, a confirmation request notification message may be sent to the maintenance terminal 600 of the maintenance worker to request to confirm the failure diagnosis result, as shown in FIG. 4. The confirmation request notification message may include a web link address CL of the failure diagnosis server where the failure diagnosis result can be confirmed. The confirmation request notification message may be sent via SMS to a mobile phone of the maintenance worker or to the maintenance terminal, as shown in FIG. 4.

An access input signal to the web link address CL may be generated by the maintenance worker touching the web link address CL included in an SMS type confirmation request notification message. In response to the access input signal, the controller 604 may be configured to send a data request signal corresponding to the web link address CL to the failure diagnosis server 500. The controller 604 may control the display unit 602 to display the error code data and the failure diagnosis result received from the failure diagnosis server 500 corresponding to transmission of the data request signal.

In other words, by touching the web link address CL of the confirmation request notification message sent to the maintenance terminal 600, the maintenance worker can access the failure diagnosis server 500 to check the error code and the failure diagnosis result.

On the other hand, as shown in FIG. 5, the maintenance worker may access the failure diagnosis server through a separate maintenance management program installed in the maintenance terminal. For example, a connection button CB may be formed in the maintenance management program of the maintenance terminal. By touching the connection button CB, the maintenance worker may generate an access input signal with respect to the failure diagnosis server 500. The controller 604 may send a data request signal corresponding to the connection button CB to the failure diagnosis server 500 in response to the access input signal and control the display unit 602 to display the error code data and the failure diagnosis result received from the failure diagnosis server 500 corresponding to transmission of the data request signal.

In other words, the elevator maintenance management system may be configured to allow the maintenance worker to access the failure diagnosis server 500 to check the error codes, the failure diagnosis results, and the like by touching the connection button CB formed in the maintenance management program of the maintenance terminal 600. In this case, a connection button CB may be formed in the form of a button labeled with a phrase, such as "Connect to failure diagnosis," as shown in FIG. 5.

In the maintenance management program, when the maintenance worker wants to check failure data, such as past failure data of the elevator for reference while checking past failure treatment results, the maintenance worker can check the past failure data and the failure diagnosis results through the connection button CB. In other words, in the maintenance management program, the maintenance worker can check the failure data and the failure diagnosis results of the elevator at any time by touching the connection button CB. As a result, it is possible to improve accuracy of maintenance work and such data and diagnosis results can be utilized as reference data for maintenance work even by non-experts.

To summarize, upon occurrence of a failure in an elevator, basic data about the elevator may be sent together with confirmation request notification for an error code and a failure diagnosis result of the elevator to the maintenance terminal of the selected maintenance worker. This can be carried out in the form of a text message. When an access input signal is generated through the link address CL included in the text message or the connection button CB of the maintenance management program, a data request signal may be sent to the failure diagnosis server 500, and the maintenance terminal 600 may receive the error code and the failure diagnosis result from the failure diagnosis server 500 and may display the error code and the failure diagnosis result on the display unit 602.

Accordingly, since the maintenance worker can check the error code and the failure diagnosis result of the corresponding elevator before dispatching to a failure site, the maintenance worker can prepare necessary components and equipment in advance.

On the other hand, the error code storage unit 502 of the failure diagnosis server 500 may be configured to arrange and store the error code data received through the first communication unit 501a in a time sequence. The error code storage unit 502 may be configured to store the error code data by classifying the error code data into one time-series data group at every preset reference time interval. The diagnosis unit 503 may be configured to analyze the corresponding error code data for each time-series data group stored in the error code storage unit 502 to diagnose a failure cause for the time-series data group.

In addition, the display unit 602 of the maintenance terminal 600 may include a first output screen 610 having an error code display region 611 in which error code data is displayed, and a diagnosis result display region 612 in which failure diagnosis results are displayed, as shown in FIG. 4 and FIG. 5. In the error code display region 611, at least one error code may be displayed in a time sequence for each time-series data group classified in the failure diagnosis server 500. In other words, one time-series data group is displayed in one error code display region 611. Here, one diagnosis result display region 612 may be formed corresponding to one error code display region 611 such that a failure diagnosis result can be displayed for each time-series data group.

Further, as shown in FIG. 6, the error code data displayed in the error code display region 611 includes an error code name (EN), an error code occurrence time (ET), and elevator operation state data (ED) upon occurrence of the error code. In addition, activation information (EA) for the corresponding error code may also be displayed.

For example, the error code name (EN) may be displayed as "ER_HUP_BTN_JAM" to indicate the type of error code and the error code occurrence time (ET) may be displayed in a region under the error code name. Further, the elevator operation state data ED generated upon occurrence of the error code may include the number of floors, the current speed/maximum speed (in FIG. 6, 3 floors, current speed 0/maximum speed 120), and the like. Further, the activation information (EA) of the error code indicates whether the error code is currently activated or deactivated, and when the activation information is displayed as "OFF" as shown in FIG. 6, it can be understood that the error code is currently deactivated.

According to this structure, when a maintenance worker accesses the failure diagnosis server 500 through the maintenance terminal 600, the maintenance terminal 600 displays error code data and failure diagnosis data for the corresponding elevator on the screen. Here, since the error code data includes the error code name, the time of occurrence, and the elevator operation state data, the maintenance worker can check the basic operation state data of the elevator in addition to the failure diagnosis result provided from the failure diagnosis server 500, and can also infer a failure diagnosis result through the related error code data.

That is, in the embodiment of the invention, by accessing the failure diagnosis server 500 through the maintenance terminal 600, the maintenance worker can check all error codes generated in the corresponding elevator, and thus can predict and determine an on-site situation before dispatching to the failure site.

As such, by receiving the error code and the operation state data of the elevator in addition to the failure diagnosis result through the maintenance terminal 600, a skilled maintenance worker can determine a failure cause that is different from the failure diagnosis result provided by the failure diagnosis server 500, thereby achieving more accurate anticipation and on-site response. In addition, an unskilled maintenance worker can use the failure diagnosis result provided by the failure diagnosis server 500 as a reference to facilitate on-site response.

In addition, a large number of error codes is generated in a period of time before and after the occurrence of a failure and the failure diagnosis server 500 may receive error code data detected by the control panel 100 of the elevator in real time. The failure diagnosis server 500 can collect all error code data and elevator operation state data generated during the period of time before and after the occurrence of the failure, thereby providing more accurate failure diagnosis results.

Furthermore, the failure diagnosis server 500 can diagnose a failure cause for each time-series group by separately categorizing error codes, which are sequentially generated in a very short period of time, into a time-series group in a reference time, thereby providing more rapid and accurate diagnosis results. The reference time may be set by the error code storage unit 502 of the failure diagnosis server 500.

For example, the error code storage unit 502 of the failure diagnosis server 500 may be configured to set a reference time of 5 minutes and may store a plurality of error codes classified into one time-series data group at every 5 minute interval. When a failure occurs in the elevator, error code data are generated continuously before and after the occurrence of the failure and may be classified into one time-series data group at every 5 minute interval. As such, the failure cause is diagnosed and provided for each time-series data group. Accordingly, the error code data generated at very short time intervals of a few seconds can be rapidly classified and analyzed upon occurrence of the failure, thereby enabling rapid deduction of diagnosis results while improving the processing speed and accuracy of maintenance work.

On the other hand, a failure diagnosis program capable of diagnosing failure causes by analyzing the error code data may be installed in the failure diagnosis server 500. The failure diagnosis program may be adapted to diagnose the failure causes based on data input in advance by a skilled technician.

To this end, the failure diagnosis server 500 may include a failure cause storage unit 504 configured to match and store a plurality of predetermined reference error code data and at least one failure cause corresponding to the reference error code data.

The diagnosis unit 503 may be configured to diagnose failure causes for the error code data based on data stored in the failure cause storage unit 504. For example, the diagnosis unit 503 may be configured to diagnose the failure causes for the error code data in a machine learning manner by training the mutually matched error code data and at least one failure cause as training data.

In addition, when maintenance work is completed at a work site, the maintenance worker may input a failure treatment result. Here, the input failure treatment result may be sent to the failure diagnosis server 500 through the central management server 400. The failure diagnosis server 500 may change the data stored in the failure cause storage unit 504 to reflect such information about the failure treatment result of the maintenance worker.

To this end, the failure diagnosis server 500 may include a failure cause update unit 505 configured to reflect the information about the failure treatment result input by the maintenance worker to update the failure cause matching to the reference error code data stored in the failure cause storage unit 504.

By the failure cause update unit 505, the information about the error code and the failure cause stored in the failure cause storage unit 504 are updated and accuracy of the information about the error code and the failure cause can be improved as the amount of data of the failure treatment results increases. Thus, the elevator maintenance management system according to the embodiment of the invention can improve accuracy and reliability of the failure diagnosis results of the failure diagnosis server 500 over time.

On the other hand, when an error occurs in communication between the elevator control panel 100, the central management server 400, and the failure diagnosis server 500 for a certain period of time, the error code data stored in the elevator control panel 100 may not be sent to the failure diagnosis server 500 for a period of time for which the error continues. In this case, since all of the error code data are not sent to the failure diagnosis server 500, accuracy of the failure diagnosis results of the failure diagnosis server 500 diagnosing the failure causes based on the error code data can be deteriorated. To prepare for this case, a manual collection button may be formed on the first output screen 610 of the maintenance terminal 600. When the maintenance worker touches the manual collection button, the error code data and the like may be collected from the elevator control panel 100 to the failure diagnosis server 500 once again for a certain period of time.

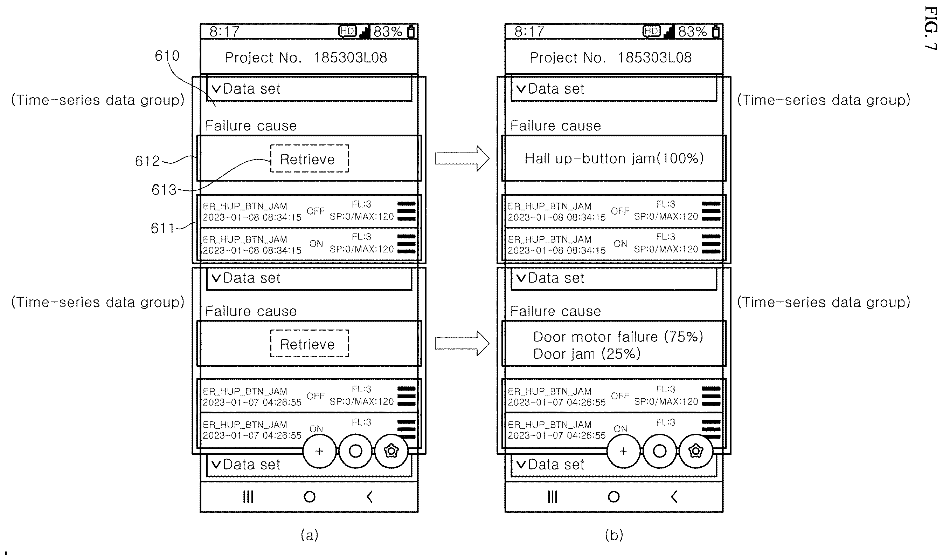

FIG. 7 is an exemplary view illustrating a method of displaying failure diagnosis results in the maintenance terminal according to the embodiment of the present invention.

In the elevator maintenance management system according to the embodiment, when a data request signal is sent to the failure diagnosis server 500 in response to an access input signal from the maintenance terminal 600 as described above, an error code and a failure diagnosis result for each time-series data group may be sent from the failure diagnosis server 500 to the maintenance terminal 600 and may be displayed thereon.

However, when the access input signal is sent from the maintenance terminal 600, a data request signal for the error code may be sent to the failure diagnosis server 500 and a plurality of error code data for each time-series data group may be sent from the failure diagnosis server 500 to the maintenance terminal 600 and displayed thereon, as shown in FIG. 7. When a data request signal requesting a failure diagnosis result is sent through the maintenance terminal 600, the diagnosis unit 503 of the failure diagnosis server 500 may diagnose a failure cause for the error code for each time-series data group. The failure diagnosis server 500 may be configured to send the corresponding failure diagnosis results to the maintenance terminal 600 to be displayed thereon.

That is, the failure diagnosis server 500 may be configured to diagnose the failure causes through the failure diagnosis program and provide the failure diagnosis results to the maintenance terminal when the maintenance worker requests such diagnosis results, instead of immediately providing the failure diagnosis results for the error codes in one time-series data group upon accessing the failure diagnosis server 500.

More specifically, when an access input signal is generated by a maintenance worker touching the link address CL sent as a text message to the maintenance terminal 600 or touching the connection button CB of the maintenance management program, the controller 604 of the maintenance terminal 600 may send a data request signal for error code data to the failure diagnosis server 500. When the failure diagnosis server 500 receives the data request signal, error codes for each time-series data group stored in the error code storage unit 502 are sent to the maintenance terminal 600 and the controller 604 of the maintenance terminal 600 may control the display unit 602 to display the error codes for each time-series data group.

Here, as shown in (a) of FIG. 7, the controller 604 of the maintenance terminal 600 may be configured to control the display unit 602 to form a diagnosis result request input button 613 in the diagnosis result display region 612 so as to allow input of data request signals for failure diagnosis results, with the error code data displayed in a classified state for each time-series data group in the error code display region 611. As described above, since the diagnosis result display region 612 is formed one by one in the error code display region 611 separated for each time-series data group and the diagnosis result request input button 613 is formed in the diagnosis result display region 612, one diagnosis result request input button 613 can be formed for each time-series data group.

In the displayed state, when the maintenance worker touches the diagnosis result request input button 613 of any one of the time-series data groups, an input signal requesting a failure diagnosis result may be generated. When such an input signal is generated, the controller 604 of the maintenance terminal 600 may send a data request signal to the failure diagnosis server 500 to request a failure diagnosis result for the error code data of the corresponding time-series data group corresponding to the diagnosis result request input button 613. In response to such a data request signal, the failure diagnosis server 500 diagnoses a failure cause for the error code of the corresponding time-series data group through the diagnosis unit 503 to derive a diagnosis result. The derived failure diagnosis result may be sent from the failure diagnosis server 500 to the maintenance terminal 600. The controller 604 of the maintenance terminal 600 may be configured to control the display unit 602 to display the received failure diagnosis result of the time-series data group in the diagnosis result display region 612 of the corresponding time-series data group on the first output screen 610. At the same time, the controller 604 may control the display unit to remove the diagnosis result request input button 613 displayed in the diagnosis result display region 612. In other words, when the failure diagnosis result is sent to the maintenance terminal 600, the diagnosis result display region 612 may display the failure diagnosis result as soon as the diagnosis result request input button 613 is removed, as shown in (b) of FIG. 7.

The diagnosis result request input button 613 formed in the diagnosis result display region 612 may be generated in the form of a "retrieve" text to be touched by a maintenance worker, as shown in FIG. 7.

With this structure, the failure diagnosis server 500 can diagnose failure causes for a particular time-series data group only when a failure diagnosis result request signal is sent from the maintenance terminal 600. Accordingly, there is no need to repeatedly diagnose failure causes for all past error codes and there is no need to separately store the failure diagnosis results for all past error codes, thereby preventing overloading of the failure diagnosis server 500 while minimizing the capacity thereof.

On the other hand, the diagnosis unit 503 of the failure diagnosis server 500 may derive at least one failure cause and occurrence probability information for each failure cause together as a diagnosis result in the course of diagnosing the failure causes for error code data of one time-series data group. The derived failure causes and occurrence probability information may be displayed together in the diagnosis result display region 612 of the maintenance terminal 600.

For example, as shown in (b) of FIG. 7, a failure diagnosis result for the first time-series data group may be displayed as "Hall up-button jam (100%)". This may mean that a failure cause is a hall up-button jam and the corresponding failure probability is 100%. The failure diagnosis for the second time-series data group may be displayed as "Door Motor Failure (75%), Door Stuck (25%)". This may mean that there is 75% probability that the failure cause is door motor failure and there is 25% probability that the failure cause is a door jam.

By displaying the probability information about the failure cause together with other data, the maintenance worker can take the probability information into account upon determining an operation sequence during the failure treatment process, enabling faster and more accurate maintenance work.

On the other hand, when the failure cause and/or the occurrence probability information displayed in the result display region 612 are/is selected, a maintenance guide corresponding to the failure cause may be displayed. The maintenance guide may include components and/or methods for repairing an indicated failure.

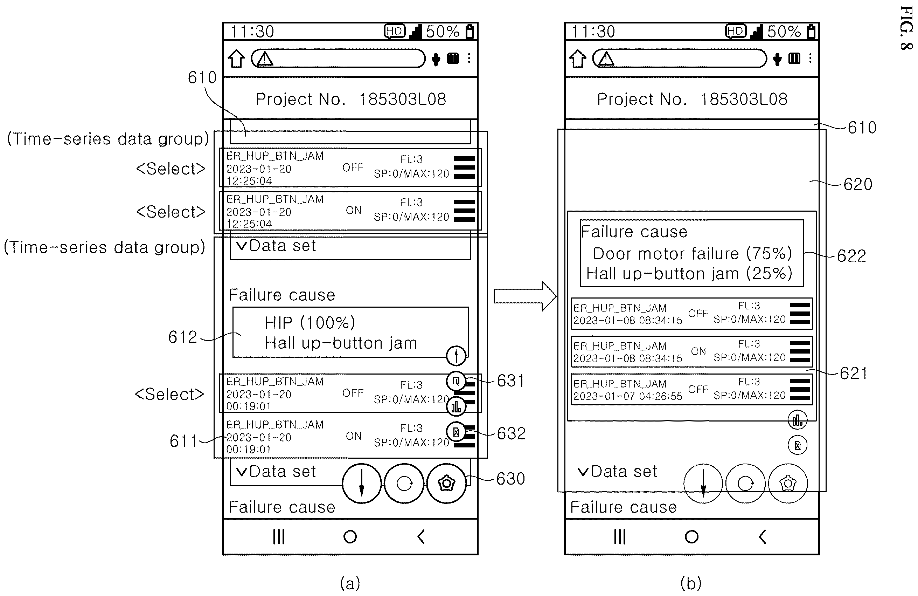

FIG. 8 is an exemplary view of a screen displaying failure diagnosis results for user-selected error code data in the elevator maintenance management system according to the embodiment of the present invention.

The elevator maintenance management system according to the embodiment of the invention may provide a failure diagnosis result based on error code data for each time-series data group through classification of a plurality of error code data into one time-series data group for each reference time interval, as described above. In addition, as shown in FIG. 8, the maintenance worker may select error code data from among the plurality of error code data and the selected error code data may be separately analyzed to provide a failure diagnosis result based on the error code data to the maintenance terminal 600.

The display unit 602 of the maintenance terminal may include the first output screen 610 having the error code display region 611 and the diagnosis result display region 612, as described above. The first output screen 610 may include a selection mode conversion button 631 configured to allow the maintenance worker to convert the first output screen 610 to a selection screen mode, in which the maintenance worker can select the error code data displayed in the error code display region 611, as shown in Figure 8. When the maintenance worker touches the selection mode conversion button 631, the maintenance worker can convert the first output screen 610 to the selection screen mode in which the maintenance worker can select error code data from among the plurality of error code data displayed in the error code display region 611. Referring to FIG. 8 (a), the first output screen 610 shows an exemplary state of being converted to the selection screen mode. In the selection screen mode, the maintenance worker may select a plurality of error code data through touch operation. FIG. 8 (a) shows an exemplary state in which three error code data are selected.

In addition, a selective diagnosis result request input button 632 is formed on the first output screen 610 to allow the maintenance worker to request a failure diagnosis result for the error code data selected in the selection screen mode from the failure diagnosis server 500.

Here, the selection mode conversion button 631 and the selective diagnosis result request input button 632 may be automatically generated at the same time that the first output screen 610 is displayed on the display unit 602. However, alternatively, the selection mode conversion button 631 and the selective diagnosis result request input button 632 may be generated on the first output screen 610 in response to touch operation of a setting button 630, which is automatically generated on the first output screen 610, as shown in (a) of FIG. 8.

The maintenance worker may touch the selection mode conversion button 631 to convert the first output screen 610 to the selection screen mode and then may select some error code data. Once selection of the error code data is completed, the maintenance worker may touch the selective diagnosis result request input button 632. When an input signal is generated through touch operation of the selective diagnosis result request input button 632, the controller 604 may send a data request signal requesting a failure diagnosis result for the selected error code data to the failure diagnosis server 500. Then, the diagnosis unit 503 of the failure diagnosis server 500 may analyze a failure cause for the selected error code data and derive a failure diagnosis result together with probability information. Thereafter, the derived failure diagnosis result may be sent to the maintenance terminal 600.

The maintenance terminal 600 may be configured to generate a selective diagnosis output screen 620 to display the error code data selected by the maintenance worker and the failure diagnosis results for the selected error code data. The controller 604 may allow the failure diagnosis results sent from the failure diagnosis server 500 to the maintenance terminal 600 to be displayed together with the selected error code data on the selective diagnosis output screen 620. Here, the selective diagnosis output screen 620 may be displayed to overlap the first output screen 610, as shown in FIG. 8 (b). The selective diagnosis output screen 620 may include a selective error code display region 621 in which the selected error code data is displayed, and a selective diagnosis result display region 622 in which a failure diagnosis result for the selected error code is displayed, as in the first output screen 610.

On the other hand, there is no particular restriction on the range of error code data that the maintenance worker can select. That is, the maintenance worker can select some error code data within one time-series data group and one or more error code data from each of different time-series data groups. FIG. 8 illustrates an exemplary state in which two error code data are selected from one time-series data group and one error code data is selected from another time-series data group.

By separately diagnosing the error code data separately selected by a user through the failure diagnosis server in this manner, it is possible to obtain not only the failure diagnosis results for the error code data of the time-series data group but also failure diagnosis results for more diverse error code data based on a user selection. In particular, by selecting such error code data, the failure cause can be separately diagnosed for the error code data during a specific period of time, for example, during confinement of passengers. As a result, it is possible to achieve further improvement in efficiency of maintenance work.

Although some exemplary embodiments have been described herein, it should be understood that these embodiments are given by way of illustration only and that various modifications, variations, and alterations can be made by those skilled in the art without departing from the spirit and scope of the invention. Accordingly, it should be understood that the embodiments disclosed herein are intended to illustrate and not to limit the technical ideas of the invention, and the scope of the technical ideas of the invention is not limited by the embodiments. The scope of protection of the invention shall be construed in accordance with the following claims and all technical ideas within the scope of equivalents thereto shall be construed to be included within the scope of the invention.

### <List of Reference Numerals>

100: Elevator control panel
200: Communication unit
310: Modem
320: Surveillance server
400: Central management server
500: Failure diagnosis server
501 a: First communication unit
501b: Second communication unit
502: Error code storage unit
503: Diagnosis unit
504: Failure cause storage unit
505: Failure cause update unit
600: Maintenance terminal
601: Terminal communication unit
602: Display unit
603: Input unit
604: Controller
610: First output screen
611: Error code display region
612: Diagnosis result display region
613: Diagnosis result request input button
620: Selective diagnosis output screen
621: Selective error code display region
622: Selective diagnosis result display region
630: Setting button
631: Selection mode conversion button
632: Selective diagnosis result request input button

## Claims

1. A maintenance management system of a passenger transfer device, the maintenance management system comprising:
a failure diagnosis server configured to collect and store error code data of the passenger transfer device from a control panel of the passenger transfer device, and configured to diagnose a failure cause based on the collected error code data; and
a maintenance terminal configured to access the failure diagnosis server to receive and display the error code data and a diagnosis result for at least one failure cause sent from the failure diagnosis server.

2. The maintenance management system according to claim 1, wherein the failure diagnosis server comprises:
a first communication unit configure to receive the error code data recorded in the control panel of the passenger transfer device;
a diagnosis unit configured to analyze the error code data to diagnose a failure cause; and
a second communication unit configured to receive a data request signal from the maintenance terminal and to send the error code data and a failure diagnosis result diagnosed by the diagnosis unit to the maintenance terminal, and
wherein the failure diagnosis server is configured to send at least one of the error code data and the failure diagnosis result to the maintenance terminal upon receiving the data request signal from the maintenance terminal.

3. The maintenance management system according to claim 2, wherein the error code data recorded in the control panel of the passenger transfer device is sent to a central management server and the failure diagnosis server is configured to receive the error code data from the central management server through communication of the first communication unit with the central management server.

4. The maintenance management system according to claim 2, wherein the maintenance terminal comprises:
an input unit for input operation of a maintenance worker;
a display unit configured to display at least one of the error code data and the failure diagnosis result sent from the failure diagnosis server;
a terminal communication unit configured to receive at least one of the error code data and the failure diagnosis result from the failure diagnosis server through communication with the second communication unit; and
a controller configured to send a data request signal to the failure diagnosis server through the terminal communication unit upon generation of an input signal by the maintenance worker and to control the display unit to display at least one of the error code data and the failure diagnosis result received from the failure diagnosis server corresponding to transmission of the data request signal.

5. The maintenance management system according to claim 4, wherein, when an access input signal of the maintenance worker to a link address sent to the failure diagnosis terminal via a text message is generated, the controller sends a data request signal corresponding to the link address to the failure diagnosis server and controls the display unit to display at least one of the error code data and the failure diagnosis result received from the failure diagnosis server corresponding to transmission of the data request signal.

6. The maintenance management system according to claim 4, wherein, when an access input signal of the maintenance worker is generated through a connection button of a preset maintenance management program, the controller sends a data request signal corresponding to the connection button to the failure diagnosis server and controls the display unit to display at least one of the error code data and the failure diagnosis result received from the failure diagnosis server corresponding to transmission of the data request signal.

7. The maintenance management system according to claim 5 or 6, wherein, when the access input signal to the link address and the access input signal through the maintenance management program are generated, the controller sends a data request signal for the error code data to the failure diagnosis server and controls the display unit to display the error code data received from the failure diagnosis server.

8. The maintenance management system according to claim 7, wherein, when a data request input signal requesting the failure diagnosis result is generated by input operation of the maintenance worker, the controller sends a data request signal for the failure diagnosis result to the failure diagnosis server and controls the display unit to display the failure diagnosis result received from the failure diagnosis server together with the error code data.

9. The maintenance management system according to claim 2, wherein the failure diagnosis server further comprises a failure cause storage unit configured to match and store a plurality of predetermined reference error code data and at least one failure cause corresponding to each of the reference error code data, and the diagnosis unit is configured to diagnose a failure cause for the error code data based on data stored in the failure cause storage unit.

10. The maintenance management system according to claim 9, wherein the failure diagnosis server further comprises a failure cause update unit configured to newly match a failure cause to the reference error code data stored in the failure cause storage unit by reflecting information about a failure treatment result input by the maintenance worker.

11. The maintenance management system according to claim 1, wherein the error code data displayed on the maintenance terminal comprises at least one of an error code name, an error code occurrence time, and information about an operation state of the passenger transfer device upon occurrence of an error code.

12. A maintenance management system of a passenger transfer device, comprising:
a failure diagnosis server configured to collect and store error code data of the passenger transfer device from a control panel of the passenger transfer device, and configured to diagnose a failure cause based on the collected error code data; and
a maintenance terminal configured to access the failure diagnosis server to receive and display the error code data and a diagnosis result for at least one failure cause sent from the failure diagnosis server,
wherein the failure diagnosis server is configured to classify a plurality of sequentially generated error code data into one time-series data group at every preset reference time interval and diagnose a failure cause by analyzing the error code data for each time-series data group.

13. The maintenance management system according to claim 12, wherein the failure diagnosis server comprises:
a first communication unit configured to receive the error code data recorded in the control panel of the passenger transfer device in real time;
an error code storage unit configured to arrange and store the error code data received through the first communication unit in a time sequence, and configured to classify the error code data into one time-series data group at every preset reference time interval;
a diagnosis unit configured to analyze the error code data for each time-series data group stored in the error code storage unit to diagnose a failure cause for the time-series data group; and
a second communication unit configured to receive a data request signal from the maintenance terminal and to send the error code data stored in the error code storage unit and a failure diagnosis result diagnosed by the diagnosis unit to the maintenance terminal, and
wherein the failure diagnosis server is configured to send at least one of the error code data and the failure diagnosis result to the maintenance terminal upon receiving the data request signal from the maintenance terminal.

14. The maintenance management system according to claim 13, wherein the maintenance terminal comprises:
an input unit for input operation of a maintenance worker;
a display unit configured to display at least one of the error code data and the failure diagnosis result sent from the failure diagnosis server;
a terminal communication unit configured to receive at least one of the error code data and the failure diagnosis result from the failure diagnosis server through communication with the second communication unit; and
a controller configured to send a data request signal to the failure diagnosis server through the terminal communication unit upon generation of an input signal by the maintenance worker and to control the display unit to display at least one of the error code data and the failure diagnosis result received from the failure diagnosis server corresponding to transmission of the data request signal.

15. The maintenance management system according to claim 14, wherein the display unit comprises a first output screen having an error code display region in which the error code data is displayed in a classified state for each time-series data group, and a diagnosis result display region in which a failure diagnosis result for the error code data is displayed for each time-series data group.

16. The maintenance management system according to claim 15, wherein, when an access input signal to the failure diagnosis server is generated by a maintenance worker, the controller sends a data request signal for the error code data to the failure diagnosis server and controls the display unit to display the error code data received corresponding to the data request signal from the failure diagnosis server in the error code display region in a classified state for each time-series data group.

17. The maintenance management system according to claim 16, wherein the controller controls the display unit to display a diagnosis result request input button for inputting a data request signal for the failure diagnosis result in the diagnosis result display region, with the error code data displayed in a classified state for each time-series data group in the error code display region.

18. The maintenance management system according to claim 17, wherein, when an input signal requesting the failure diagnosis result is generated through the diagnosis result request input button, the controller sends a data request signal to the failure diagnosis server, the data request signal requesting a failure diagnosis result for error code data of a time-series data group corresponding to the diagnosis result request input button, and controls the display unit to display the failure diagnosis result while removing the diagnosis result request input button from the diagnosis result display region, upon receiving the failure diagnosis result from the failure diagnosis server corresponding to the data request signal.

19. The maintenance management system according to claim 14, wherein, when the failure diagnosis server receives a data request input signal for the failure diagnosis result from the maintenance terminal, the diagnosis unit diagnoses a failure cause for the error code data of the corresponding time-series data group and sends the diagnosis result to the maintenance terminal.

20. The maintenance management system according to claim 19, wherein the diagnosis unit is configured to diagnose the failure cause for the error code data of the corresponding time-series data group to derive a diagnosis result comprising at least one failure cause and occurrence probability information for each failure cause.

21. A method of controlling a maintenance management system of a passenger transfer device including a failure diagnosis server and a maintenance terminal, the method comprising:
collecting and storing, by the failure diagnosis server, error code data of the passenger transfer device from a control panel of the passenger transfer device;
diagnosing, by the failure diagnosis server, a failure cause based on the collected error code data; and
accessing, by the maintenance terminal, the failure diagnosis server to receive and display the error code data and a diagnosis result for the failure cause sent from the failure diagnosis server,
wherein the failure diagnosis server classifies a plurality of sequentially occurred error code data into one time-series data group at every preset reference time interval and diagnoses the failure cause by analyzing the error code data for each time-series data group.

22. A maintenance management system of a passenger transfer device, comprising:
a failure diagnosis server configured to collect and store error code data of the passenger transfer device from a control panel of the passenger transfer device, and configured to diagnose a failure cause based on the collected error code data; and
a maintenance terminal configured to access the failure diagnosis server to receive and display the error code data and a diagnosis result for the failure cause sent from the failure diagnosis server,
wherein the maintenance terminal allows a maintenance worker to select some error code data from among a plurality of error code data displayed on the maintenance terminal and requests a failure diagnosis result for the selected error code data to the failure diagnosis server, and the failure diagnosis server analyzes the error code data selected by the maintenance terminal to diagnose the failure cause in response to the data request signal from the maintenance terminal and sends a failure diagnosis result to the maintenance terminal.

23. The maintenance management system according to claim 22, wherein the failure diagnosis server comprises:
a first communication unit configured to receive the error code data recorded in the control panel of the passenger transfer device in real time;
an error code storage unit configured to arrange and store the error code data received through the first communication unit in a time sequence;
a diagnosis unit configured to analyze the error code data selected through the maintenance terminal from among the error code data stored in the error code storage unit to diagnose the failure cause; and
a second communication unit configured to receive a data request signal from the maintenance terminal and to send the error code data stored in the error code storage unit and the failure diagnosis result diagnosed by the diagnosis unit to the maintenance terminal, and
wherein the failure diagnosis server is configured to send at least one of the error code data and the failure diagnosis result to the maintenance terminal upon receiving the data request signal from the maintenance terminal.

24. The maintenance management system according to claim 23, wherein the maintenance terminal comprises:
an input unit for input operation by a maintenance worker;
a display unit configured to display the error code data and the failure diagnosis result sent from the failure diagnosis server;
a terminal communication unit configured to receive the error code data and the failure diagnosis result from the failure diagnosis server through communication with the second communication unit; and
a controller configured to send a data request signal to the failure diagnosis server through the terminal communication unit upon generation of an input signal by the maintenance worker and to control the display unit to display at least one of the error code data and the failure diagnosis result received from the failure diagnosis server corresponding to transmission of the data request signal.

25. The maintenance management system according to claim 24, wherein the display unit comprises: a first output screen having an error code display region in which the error code data is displayed in a classified state for each time-series data group,
the first output screen comprising a selection mode conversion button to allow the maintenance worker to convert the first output screen to a selection screen mode, in which the maintenance worker can select the error code data displayed in the error code display region, and a selective diagnosis result request input button to allow the maintenance worker to request a failure diagnosis result for the error code data selected in the selection screen mode from the failure diagnosis server.

26. The maintenance management system according to claim 25, wherein the display unit comprises a selective diagnosis output screen capable of displaying an error code data selected by the maintenance worker and a failure diagnosis result for the selected error code data, and the controller is configured to send a data request signal to the failure diagnosis server, the data request signal requesting the failure diagnosis result for the selected error code data, in response to an input signal generated by the diagnosis result request input button, and is configured to control the display unit to display the error code data and the failure diagnosis result on the selective diagnosis output screen upon receiving the failure diagnosis result from the failure diagnosis server corresponding to transmission of the data request signal.

27. The maintenance management system according to claim 26, wherein the selective diagnosis output screen is displayed to overlap the first output screen.

28. A method of controlling a maintenance management system of a passenger transfer device including a failure diagnosis server and a maintenance terminal, the method comprising:
collecting and storing, by the failure diagnosis server, error code data of the passenger transfer device from a control panel of the passenger transfer device, followed by diagnosing a failure cause based on the collected error code data; and
accessing, by the maintenance terminal, the failure diagnosis server to receive and display the error code data and a diagnosis result for the failure cause sent from the failure diagnosis server,
wherein the maintenance terminal allows a maintenance worker to select some error code data from among a plurality of error code data displayed on the maintenance terminal and requests a failure diagnosis result for the selected error code data from the failure diagnosis server, and the failure diagnosis server analyzes the error code data selected by the maintenance terminal to diagnose the failure cause in response to the data request signal from the maintenance terminal and sends a failure diagnosis result to the maintenance terminal.
